# EUROPEAN PATENT APPLICATION

(11) **EP 4 803 179 A1**
(43) Date of publication of application: **09.09.2026**
(21) Application number: 25161543.1
(22) Date of filing: 04.03.2025
(51) Int. Cl.: B01D 53/50, B01D 53/75, B01D 53/78

(54) **METHOD AND APPARATUS FOR CLEANING A FLUE GAS OF A CEMENT PLANT**

(71) Applicant: Holcim Technology Ltd., 6300 Zug (CH)
(72) Inventor: CORRALES, Jesus, 5113 Holderbank (CH); SEYLER, Laurent, 5113 Holderbank (CH)
(74) Representative: SONN Patentanwälte GmbH & Co KG

(57) **Abstract**

The invention refers to a method for the removal of contaminants from a flue gas (1) of a cement plant to obtain a lean gas (31), comprising a first gas washing and cooling step with a first aqueous washing fluid comprising an alkaline substance to remove sulfur oxides, halides, heavy metals, and/or particulate matter from the flue gas (1), and subsequently at least one additional gas washing and/or cooling step with another aqueous washing fluid to remove additional contaminants and/or humidity from the flue gas (1).

## Description

The invention refers to a method and to an apparatus for the removal of contaminants from a flue gas of a cement plant to obtain a lean gas.

In the field of emissions control for cement plants, standard technologies currently include electrostatic precipitators, fabric filters, and selective catalytic reduction (SCR) systems, which address particulate matter and nitrogen oxides (NOx). However, globally tightening regulations on emissions, including limits for sulfur oxides, halides, heavy metals, and other pollutants, are driving the demand for more advanced and efficient solutions. In particular, the emergence of carbon capture technologies necessitates exceptionally clean exhaust gas to optimize carbon capture efficiency.

Scrubber technologies are employed in the waste-to-energy and power generation sectors, where they are used for the removal of sulfur oxides (SOx) and hydrogen chloride (HCl) from flue gases. In the oil and gas industry, gas scrubbers are employed to remove acid gases, such as hydrogen sulfide (H₂S) and carbon dioxide (CO₂), ensuring compliance with emissions regulations and protecting downstream equipment.

However, until now, gas washing technologies have rarely been implemented in the cement industry due to significant challenges, including high water consumption, the need for complex wastewater treatment systems, and concerns over operational compatibility with the predominantly dry cement production process. Additionally, the cost and logistical requirements of retrofitting scrubbers into existing facilities have further limited their adoption.

In areas where cement plants are located, water scarcity is often a concern. Cement plants typically operate in regions with limited access to water resources, often in dry or semi-arid climates, where competition for water with agriculture and local populations exacerbates the issue. The need for significant amounts of water for industrial operations can strain already scarce resources, leading to environmental and operational challenges.

In the known methods for the removal of contaminants from a flue gas of a cement plant to obtain a lean gas, the focus has primarily been on dry technologies to minimize water usage and avoid wastewater treatment, keeping the process as simple as possible. However, the known dry emissions control technologies are no longer sufficient to meet increasingly stringent regulatory limits and/or to fulfill the requirements of a downstream carbon capture process, in particular with respect to purity, temperature and humidity of the lean gas.

The use of single-stage direct contact coolers is also known in the cement industry, where flue gas is cooled by injecting water. By adding sodium hydroxide solution (NaOH) to the injected water, acidic components can be removed from the flue gas. However, a very high amount of NaOH is required to achieve a sufficiently pure gas, particularly for downstream carbon capture, as the contact time in a single-stage scrubber is relatively short. As a result of the excessive use of NaOH, a large volume of highly alkaline wastewater is typically generated. Treating this highly alkaline wastewater usually consumes an additional amount of freshwater.

Therefore, the present invention aims at providing a method for the removal of contaminants from a flue gas of a cement plant, wherein the obtained lean gas has a low level of contaminants, low temperature and low humidity in order to minimize water loss, to meet the regulatory limits and to enable the implementation of a downstream carbon capture process. Additionally, the consumption of chemicals and water should be minimized, and hazardous wastewater generation should be avoided.

In order to solve these and other objects, the invention provides a method for the removal of contaminants from a flue gas of a cement plant to obtain a lean gas, comprising
- a first gas washing and cooling step with a first aqueous washing fluid comprising an alkaline substance to remove sulfur oxides (SOₓ), halides, heavy metals, and/or particulate matter from the flue gas, and subsequently
- at least one additional gas washing and/or cooling step with another aqueous washing fluid to remove additional contaminants, and/or humidity from the flue gas.

In the context of the invention, the general terms "gas washing steps", "gas washing and/or cooling steps" or "washing steps" or the like are meant to include at least the first gas washing and cooling step and the at least one additional gas washing and/or cooling step.

In the first gas washing and cooling step, various contaminants, in particular sulfur oxides, halides, heavy metals, and/or particulate matter, are removed from the flue gas, and the flue gas is cooled to a certain extent. Preferably, in the first gas washing and cooling step, the humidity of the flue gas is reduced by condensation due to the cooling effect of the first aqueous washing fluid. However, the first gas washing and cooling step may be insufficient to meet the regulatory limits and/or to fulfill the requirements of a downstream carbon capture process.

In the at least one additional gas washing and/or cooling step, additional contaminants may be removed. Moreover, the flue gas may be further cooled, and additional humidity may be removed by condensation. By providing the at least one additional washing and/or cooling step, the contact time of the flue gas with said aqueous washing fluids can be increased. Thus, compared to a single-stage process, the total amount of the alkaline substance can be reduced without impairing contaminant removal. Since it is not necessary to add the alkaline substance in excess, the resulting effluent may exhibit an essentially neutral pH, which makes said effluent relatively safe and easy to handle. Preferably, the pH of the combined effluent resulting from said gas washing and/or cooling steps is between 6.0 and 8.0, more preferably between 6.5 and 7.5, and most preferably between 6.5 and 7.0. Moreover, the total water consumption and the amount of effluent generated can be reduced by reducing the amount of the alkaline substance.

The first gas washing and cooling step, in combination with the at least one additional gas washing and/or cooling step, may permit sufficient contaminant removal, cooling, and condensation of humidity to fulfill the requirements of a downstream carbon capture process regarding the purity, temperature, and humidity of the lean gas.

The removal of multiple contaminants in one system according to the invention may reduce the complexity and operational costs (CAPEX and OPEX) compared to traditional systems, which require an increased number of components.

Sulfur oxides may include sulfur dioxide, sulfur trioxide, sulfurous acid, and/or sulfuric acid. The halides may include hydrogen halides such as hydrogen chloride, and/or hydrogen bromide. The heavy metals may include mercury, cadmium, thallium, and/or others. The additional contaminants to be removed in the at least one additional gas washing and/or cooling step may include additional sulfur oxides, halides, heavy metals and/or particulate matter, which were not removed in the first gas washing and cooling step, and/or other compounds, e.g. nitrogen oxides (NOₓ), organic compounds, such as volatile organic compounds (VOCs), hydrogen sulfide (H₂S) or the like.

The alkaline substance may be chosen separately for each of said aqueous washing fluids from the group consisting of sodium hydroxide, potassium hydroxide, calcium hydroxide, calcium oxide, magnesium hydroxide, sodium carbonate, potassium carbonate, ammonia, or any combination thereof. In a preferred embodiment, at least one of said aqueous washing fluids comprises sodium hydroxide, preferably an aqueous solution of sodium hydroxide, as an alkaline substance. Said aqueous solution may comprise sodium hydroxide in an amount ranging from 20 wt.% to 60 wt.% NaOH, preferably from 30 wt.% to 50 wt.%, more preferably from 35 wt.% to 45 wt.%.

Preferably, sodium hydroxide is supplied to the first gas washing and cooling step to maintain an essentially constant pH of the first aqueous washing fluid. Preferably, the amount of sodium hydroxide supplied to the first gas washing and cooling step is less than 15.0 mmol per Nm³ of flue gas, preferably less than 10.0 mmol per Nm³ of flue gas, and most preferably less than 6.7 mmol per Nm³ of flue gas. Preferably, the amount of sodium hydroxide supplied to the first gas washing and/or cooling step is in the range of 0.1 mmol to 15.0 mmol per Nm³ of flue gas, preferably in the range of 1.0 mmol to 10.0 mmol per Nm³ of flue gas, and most preferably in the range of 3.4 mmol to 6.7 mmol per Nm³ of flue gas.

In a preferred embodiment, the flue gas is cooled to its water saturation temperature before being subjected to the first gas washing and cooling step. Preferably, said temperature is between 100°C and 200°C, more preferably between 120°C and 180°C, and most preferably between 140°C and 160°C. Preferably, the inventive method is carried out at atmospheric pressure. Preferably the water content of the flue gas at its saturation temperature is in the range of 5 wt.% to 20 wt.%, preferably in the range of 10 wt.% to 15 wt.%.

In a preferred embodiment, the aqueous washing fluid of at least one of said gas washing and/or cooling steps, preferably the respective aqueous washing fluid of each of said gas washing and/or cooling steps, is circulated in a closed loop. Preferably, the respective aqueous washing fluid, after being contacted with the flue gas stream in a gas washing and/or cooling step, is at least partially recirculated to the same gas washing and/or cooling step to be again contacted with the flue gas stream. The closed loop may be realized by a recirculation line. The recirculation line may comprise an alkaline substance supply for supplying a defined amount of the alkaline substance to the respective aqueous washing fluid. A portion of the respective aqueous washing fluid may be withdrawn from the closed loop. Said portion may be subjected to a wastewater treatment process and subsequently discharged or recycled to any one of said gas washing and/or cooling steps. The volume of said portion may be replaced by any other aqueous fluid, preferably freshwater and/or the aqueous washing fluid of another gas washing and/or cooling step. The recirculation line may comprise a heat exchanger for cooling the circulating aqueous washing fluid. Preferably, such heat exchanger is present at least in the recirculation line of the closed loop of the first gas washing and cooling step.

According to a preferred embodiment of the invention, at least a portion of the first aqueous washing fluid is withdrawn from the first gas washing step and distilled to obtain a concentrated salt solution and clean water, wherein said clean water is fed back to any one of said gas washing and/or cooling steps.

By the inventive recovery of process water, the freshwater demand and the amount of effluent can be minimized as almost the full amount of process water can be recirculated and the concentrated salt solution is the only effluent. Thus, the inventive method may significantly reduce wastewater treatment demands and environmental impact. The inventive method may also significantly reduce water consumption, making it feasible even in water-scarce regions.

Combined with the inventive multi-stage gas washing and cooling process, the effluent may exhibit an essentially neutral pH, making it easy and safe to handle. Consequently, complex and costly wastewater treatment facilities with additional water demand may be omitted. By optimizing water usage and reducing effluent streams, the method may integrate seamlessly into the predominantly dry cement production process.

Preferably, the portion of the first aqueous washing fluid which is withdrawn from the first gas washing step is subjected to a deaeration step to remove gas bubbles and/or dissolved gases prior to the distillation to obtain a deaerated fluid. Preferably, the deaerated fluid is heated by a boiler to partially vaporize the deaerated fluid to obtain clean steam and a concentrated salt solution. Preferably, the concentrated salt solution has a pH between 6.0 and 8.0**,** more preferably between 6.5 and 7.5, and most preferably between 6.5 and 7.0. Preferably, the amount of the concentrated salt solution is less than 5 mL per Nm³ of flue gas, more preferably less than 3 mL per Nm³ of flue gas, even more preferably less than 2 mL per Nm³ of flue gas, and most preferably less than 1.3 mL per Nm³ of flue gas. Preferably, the amount of the concentrated salt solution is in the range of 0.5 to 2.0 mL per Nm³ of flue gas, more preferably in the range of 0.5 to 1.6 mL per Nm³ of flue gas, and most preferably in the range of 0.8 to 1.3 mL per Nm³ of flue gas.

Preferably, said clean steam is recondensed at a heat exchanger to obtain clean water. Preferably, said clean water is at least partially fed back to one of the at least one additional gas washing and/or cooling step. Preferably, an amount of clean water in the range of 1 to 100 mL per Nm³ of flue gas, more preferably in the range of 5 to 50 mL per Nm³ of flue gas, and most preferably in the range of 10 to 30 mL per Nm³ of flue gas is fed back to one of the at least one additional gas washing and/or cooling step. If a second gas washing step exists, the clean water is preferably at least partially fed back to the second gas washing step. A portion of the clean water may be discharged or withdrawn for alternative usage.

According to a preferred embodiment of the invention, thermal energy of the flue gas is utilized in said distillation step to heat said portion of the first aqueous washing fluid, which is withdrawn from the first gas washing step. Thereby, the energy demand for the distillation may be reduced as energy of the hot flue gas can be recycled to replace an external heat source. At the same time, the hot flue gas can be pre-cooled before entering the first gas washing and cooling step, thus reducing the cooling demand in the first gas washing and cooling step and all subsequent cooling steps. Preferably, the hot flue gas transfers heat to said portion of the first aqueous washing fluid. Preferably, the heat transfer takes place in a heat exchanger.

According to a preferred embodiment of the invention, said at least one additional gas washing and/or cooling step comprises a second gas washing step with a second aqueous washing fluid comprising an alkaline substance, wherein the pH of the second aqueous washing fluid is higher than the pH of the first aqueous washing fluid.

By providing a second gas washing step at a higher pH, the consumption of the alkaline substance in the first gas washing and cleaning step can be significantly reduced. As the concentration of contaminants in the first aqueous washing fluid approaches the thermodynamic equilibrium, the absorption of the remaining portion of contaminants in the flue gas becomes very slow. The second gas washing step at a slightly higher pH with the second aqueous washing fluid, which preferably contains fewer contaminants than the first aqueous washing fluid, allows for the efficient removal of additional contaminants, particularly acidic contaminants, including trace amounts, that remain in the flue gas after the first gas washing and cooling step.

Preferably, sodium hydroxide is supplied to the second gas washing step to maintain an essentially constant pH of the second aqueous washing fluid. Preferably, the amount of sodium hydroxide supplied to the second gas washing and/or cooling step is less than 1.0 mmol per Nm³ of flue gas, preferably less than 0.5 mmol per Nm³ of flue gas, and most preferably less than 0.3 mmol per Nm³ of flue gas. Preferably, the amount of sodium hydroxide supplied to the second gas washing and/or cooling step is in the range of 0.01 mmol to 1.0 mmol per Nm³ of flue gas, preferably in the range of 0.1 mmol to 0.5 mmol per Nm³ of flue gas, and most preferably in the range of 0.2 mmol to 0.3 mmol per Nm³ of flue gas.

In a preferred embodiment, a portion of the second aqueous washing fluid is recirculated to the first washing and cooling step. Preferably, most contaminants are washed out of the flue gas in the first gas washing and cooling step. Thus, the second aqueous washing fluid may be relatively clean. Preferably, the contaminant concentration, particularly the concentration of acidic contaminants, of the second aqueous washing fluid is lower than the contaminant concentration, particularly the concentration of acidic contaminants, of the first aqueous washing fluid, so that the recirculated portion of the second aqueous washing fluid can absorb further contaminants, in particular acidic contaminants, in the first gas washing and cooling step. The volume of the recirculated portion of the second aqueous washing fluid may be replaced by any other aqueous fluid, preferably by the aqueous washing fluid of a subsequent gas washing and/or cooling step.

If a portion of the first aqueous washing fluid is withdrawn from the first gas washing step and distilled to obtain a concentrated salt solution and clean water, preferably said clean water is fed back to the second gas washing step to replace the volume of the recirculated portion of the second aqueous washing fluid.

According to a preferred embodiment of the invention, the pH of the first aqueous washing fluid is between 5.0 and 8.0**,** preferably between 5.5 and 7.5, more preferably between 6.0 and 7.0, and most preferably between 6.3 and 6.5 and the pH of the second aqueous washing fluid is between 5.0 and 8.0**,** preferably between 5.5 and 7.5, more preferably between 6.5 and 7.5, and most preferably between 6.5 and 7.0.

For the removal of acid contaminants, such as sulfur oxides, halides, and/or hydrogen sulfide, from the flue gas, a high pH of the aqueous washing fluids is favorable. However, the flue gas of cement plants also comprises carbon dioxide (CO₂), which is a weak acid too. Typically, the CO₂ content of the flue gas is between 10 vol.% and 25 vol.%. The alkaline substance of the aqueous washing fluids may react with the CO₂ of the flue gas to form carbonates and/or bicarbonates. Such a reaction is unfavorable due to the increased consumption of the alkaline substance. The thermodynamic equilibrium of the reaction of CO₂ with the alkaline substance is pH-dependent: At higher pH, more carbonate and/or bicarbonate is formed, whereas at lower pH, carbonic acid is dominant, so the dissolution of CO₂ is largely suppressed. Consequently, it is preferable to find a reasonable compromise for the pH of the aqueous washing fluids, where, on the one hand, the acid contaminants are sufficiently removed, and on the other hand, the reaction of the alkaline substance with CO₂ is largely prevented. Aqueous washing fluids with pH values around 7, preferably with slightly acidic pH, turned out to be a reasonable compromise.

According to a preferred embodiment of the invention, the first aqueous washing fluid and/or the second aqueous washing fluid has a temperature between 35 °C and 65 °C, preferably between 40 °C and 60 °C, and more preferably between 45 °C and 55 °C. High temperatures ensure sufficient dissolution of salts formed by the reaction of the alkaline substance with flue gas components. However, if the temperatures are too high, excessive heat losses are to be expected.

According to a preferred embodiment of the invention, an alkaline substance is added to the first aqueous washing fluid, preferably to the first and second aqueous washing fluids, with an optimized rate to prevent scaling and to optimize contaminant removal, wherein the optimized rate for the addition of alkaline substance to each washing fluid is calculated using a thermodynamic model, preferably the Pitzer model.

The thermodynamic model may be used to predict scaling and optimize the contaminant removal, enabling a new level of process control and efficiency that is not prevalent in current systems. Typically, the concentration of the components, particularly of contaminants and CO₂, in the flue gas is varying, e.g. due to a varying composition of raw materials. Consequently, the demand of alkaline substance for contaminant removal is subject to fluctuations. However, if the alkaline substance was added at a constant rate, this would lead to a fluctuating pH of the aqueous washing solutions which may lead to increased precipitation of salts, increased CO₂ reaction rates, and/or decreased removal of contaminants from the flue gas. Without any optimization based on a thermodynamic model, the alkaline substance must be added in excess to ensure sufficient contaminant removal. Preferably, the thermodynamic model enables reduced alkaline substance consumption as very precise dosing is possible.

Preferably, the aqueous washing fluids of the gas washing and/or cooling steps are temperature-controlled. The combination of temperature-controlled gas washing with precise pH management - enabled by a thermodynamic model to predict scaling and optimize the contaminant removal - offers a new level of process control and efficiency that is not prevalent in current systems.

The use of a thermodynamic model for pH control may also increase the retrofit capability of the inventive method as it allows the adaption to varying flue gas compositions and capacities, ensuring broad industrial applicability and consistent performance. Preferably, the inventive method can handle both small-scale and large-scale cement production plants with minimal design changes.

According to a preferred embodiment of the invention, said at least one additional gas washing and/or cooling step comprises a final cooling and gas washing step with a third aqueous washing fluid to reduce the humidity of the flue gas by condensation, obtaining said lean gas, preferably wherein the water content of the lean gas is less than 4 mol%.

Preferably, the condensate obtained by condensation of humidity of the flue gas is combined with the third aqueous washing fluid. The third aqueous washing fluid may essentially consist of said condensate. If a second gas washing step exists, preferably a portion of the third aqueous washing fluid is fed back to the second gas washing step. Preferably, a portion of the third aqueous washing fluid is discharged or withdrawn for alternative usage in order to remove the additional volume of water which is formed by condensation in the final cooling and gas washing step.

Preferably, the third aqueous washing fluid is cooled by a heat exchanger. Preferably, the third aqueous washing fluid is circulated in a closed loop which is realized by a recirculation line. Preferably, the recirculation line comprises said heat exchanger for cooling the third aqueous washing fluid.

Condensation may be nucleated by particulate matter in the flue gas. Consequently, the respective particles are washed out of the flue gas. Preferably, particulate matter, which was not removed from the flue gas after the preceding gas washing and/or cooling steps is at least partially removed in the final gas washing and cooling step.

According to a preferred embodiment of the invention, the third aqueous washing fluid is subjected to an advanced oxidation process (AOP), preferably using ozone, hydrogen peroxide, and/or UV radiation to oxidize organic compounds, such as VOCs, nitrogen oxides, hydrogen sulfide, and/or mercury. Plasma-based AOPs can also be used.

Advanced Oxidation Processes (AOPs) are known in industries such as wastewater treatment, where they are used to break down persistent organic pollutants, and in air purification systems targeting volatile organic compounds (VOCs) in sectors like petrochemicals and waste incineration. However, AOPs have not been employed in the cement industry due to the predominantly inorganic nature of cement kiln emissions, which may be effectively addressed by established technologies. However, especially due to the increasing use of residual derived fuels (RDFs) in the cement industry, the flue gas of modern cement plants may also contain organic compounds which are difficult to remove with the established technologies.

AOPs allow for the efficient removal of organic contaminants from the flue gas while ensuring minimal use of chemicals. Common AOPs are based on the addition of an oxidant, such as ozone, hydrogen peroxide, and/or other oxidizing species. The in-situ generation of strongly oxidizing species, such as radicals, may be triggered by UV radiation. Organic compounds, nitrogen oxides, hydrogen sulfide, and/or mercury, which may be present in the flue gas or in the third aqueous washing fluid, can be oxidatively decomposed by ozone, hydrogen peroxide, radicals, and/or other oxidizing species. Preferably, an oxidant is added to the third aqueous washing fluid in the recirculation line. Preferably, the third aqueous washing fluid is subject to UV radiation, preferably in the recirculation line after the addition of an oxidant.

The use of these AOPs, especially when UV radiation is used together with ozone or hydrogen peroxide, further allows for higher efficiency in degrading pollutants such as persistent organic pollutants and heavy metals.

Plasma-Based AOPs, especially non-thermal plasma sources generate reactive oxygen and nitrogen species (ROS & RNS) that decompose pollutants like NOx, SOx, VOCs, and dioxins. Such AOPs can also be applied before adsorption or wet scrubbing systems to improve removal efficiency. Such AOP have the advantage of working at low temperatures and require no external additional chemicals.

In a preferred embodiment, the flue gas is contacted with the third aqueous washing fluid in countercurrent flow. The inventive method introduces a novel configuration by using AOPs in conjunction with a countercurrent flow design. This setup increases the residence time of photoexcited ozone in the water phase, enhancing contaminant removal efficiency while keeping chemical costs low. This design creates an operational synergy that is not widely employed in current flue gas pretreatment technologies.

According to a preferred embodiment of the invention, the temperature of the lean gas after the final cooling and gas washing step is less than 40 °C, preferably less than 30 °C. Preferably, the temperature of the lean gas after the final cooling and gas washing step is in the range of 25 to 35 °C. Cooling the lean gas to such low temperatures allows for a very high degree of water recovery, as most of the water originally present in the flue gas is condensed out. Cooling the lean gas to such low temperatures also allows for a very high degree of heat recovery, preferably by means of heat exchangers.

Most importantly, the lean gas at this temperature level is suitable for most common carbon capture processes that may follow the final cooling and gas washing step. Common carbon capture processes include liquid absorption processes, solid adsorption processes, cryogenic processes, and membrane separation processes. All of them may be more efficient at lower temperatures. In some carbon capture processes, the lean gas must not exceed a certain temperature to avoid damage of heat-sensitive materials like membranes, absorbents, or adsorbents. Some carbon capture processes may require a lean gas at low humidity, which can be provided by the inventive method. A lean gas at high humidity may damage water-sensitive membranes or adsorbent, or cause icing of equipment in a cryogenic process.

According to a preferred embodiment of the invention, the aqueous washing fluid of each gas washing step is, after contacting the respective aqueous washing fluid with the flue gas, at least partially fed to the previous gas washing step. This particular process design enables a very effective and economical process, as the aqueous washing fluid is continuously replaced by the washing fluid of a subsequent washing step, which preferably contains fewer contaminants. The contaminants of all aqueous washing fluids may be collectively removed from the process in the first gas washing and/or cooling step, where most contaminants are accumulated. In this way, a countercurrent flow design may be realized for the overall process, wherein the clean condensate of the final gas washing and cooling step is flowing in countercurrent with the flue gas throughout all gas washing and/or cooling steps.

According to a preferred embodiment of the invention, the flue gas is contacted with said aqueous washing fluids in countercurrent flow. Additionally, or alternatively to the abovementioned countercurrent flow design for the overall process, the single gas washing steps may be conducted in countercurrent flow as well. Preferably, the aqueous washing fluid of each gas washing and/or cooling step is contacted with the flue gas in countercurrent flow. Preferably, within each gas washing and/or cooling step, the respective aqueous washing fluid essentially flows in the direction of gravity, and the flue gas essentially flows against the direction of gravity.

According to a preferred embodiment of the invention, the lean gas is subjected to a carbon capture process. To improve the environmental balance of the cement plant, CO₂ may be removed from the flue gas by a carbon capture process. The inventive method may provide a clean, cool, and dry flue gas, which may be suitable for all common carbon capture processes, as well as for subsequent CO₂ utilization, transport, and storage processes. Due to the high energy efficiency of the inventive method, the energy demand of a subsequent carbon capture process may be at least partially compensated. The heat removed from the flue gas by heat exchangers in the inventive method may be used in a carbon capture process, e.g., for desorption of CO₂.

The object is also solved by an apparatus for the removal of contaminants from a flue gas of a cement plant to obtain a lean gas, comprising
- a first gas scrubber comprising a first aqueous washing fluid, the first aqueous washing fluid comprising an alkaline substance and being suitable for removal of sulfur oxides, halides, heavy metals, and/or particulate matter from the flue gas, and
- at least one additional gas scrubber comprising another aqueous washing fluid, the other aqueous washing fluid being suitable for removal of additional contaminants from the flue gas and/or for removal of humidity by condensation.

The inventive apparatus allows the simultaneous removal of various contaminants in one combined device and may be easily retrofitted into any existing cement plant.

Preferably, the first gas scrubber comprises a feeding device for supplying an alkaline substance to the respective aqueous washing fluid.

Each gas scrubber may comprise a recirculation line for circulating the aqueous washing fluid in a closed loop. The recirculation lines may comprise heat exchangers, feeding devices, e.g., for the addition of alkaline substances or oxidants, or UV sources. The recirculation lines may comprise branch lines for connection with other parts of the apparatus like other gas scrubbers, discharge lines, or effluent treatment facilities.

According to a preferred embodiment of the invention, the apparatus further comprises
- a distillation unit being connected to the first gas scrubber to distill at least a portion of the first aqueous washing fluid to obtain a concentrated salt solution and clean water,
- a piping connection for feeding said clean water back to any one of said gas scrubbers.

Preferably, the distillation unit comprises a deaerator. Preferably, the distillation unit comprises a boiler. Preferably, the distillation unit comprises a heat exchanger for the condensation of clean steam.

According to a preferred embodiment of the invention, said at least one additional gas scrubber comprises a second gas scrubber, the second gas scrubber comprising a second aqueous washing fluid, the second aqueous washing fluid comprising an alkaline substance,
wherein the pH of the second aqueous washing fluid is higher than the pH of the first aqueous washing fluid.

Preferably, the second gas scrubber comprises a feeding device for supplying an alkaline substance to the respective aqueous washing fluid. Preferably, the second gas scrubber is connected to the clean water outlet of the distillation unit.

According to a preferred embodiment of the invention, said at least one additional gas scrubber comprises a final gas scrubber, the final gas scrubber comprising a third aqueous washing fluid and a cooling unit for cooling the third aqueous washing fluid, so that the final gas scrubber is suitable for cooling the flue gas and for reducing the humidity of the flue gas by condensation, preferably wherein the water content of the lean gas is less than 4 mol%.

According to a preferred embodiment of the invention, each gas scrubber is connected to the previous gas scrubber by a liquid conduit so that the aqueous washing fluid of each gas scrubber may at least partially be fed to the previous gas scrubber.

Preferably, the third gas scrubber comprises a feeding device for supplying an oxidant to the third aqueous washing fluid. Preferably, the third gas scrubber comprises a UV source for subjecting the third aqueous washing fluid to UV radiation.

According to a preferred embodiment of the invention, each gas scrubber is a countercurrent gas scrubber. Countercurrent gas scrubbers exhibit superior mass transfer capabilities compared to other scrubber designs, which result in more effective removal of pollutants with optimized use of scrubbing liquid and lower operational costs. The countercurrent gas scrubber may be designed, e.g., as a packed bed scrubber, spray tower scrubber, Venturi scrubber, bubble column scrubber, or tray scrubber.

Unless otherwise stated, all percentage values within the present disclosure shall refer to weight percent (wt.%).

The unit Nm³ (Normal cubic meter) is defined as the amount of gas possessing a volume of 1 m³ at normal conditions (273.15 K, 1 atm).

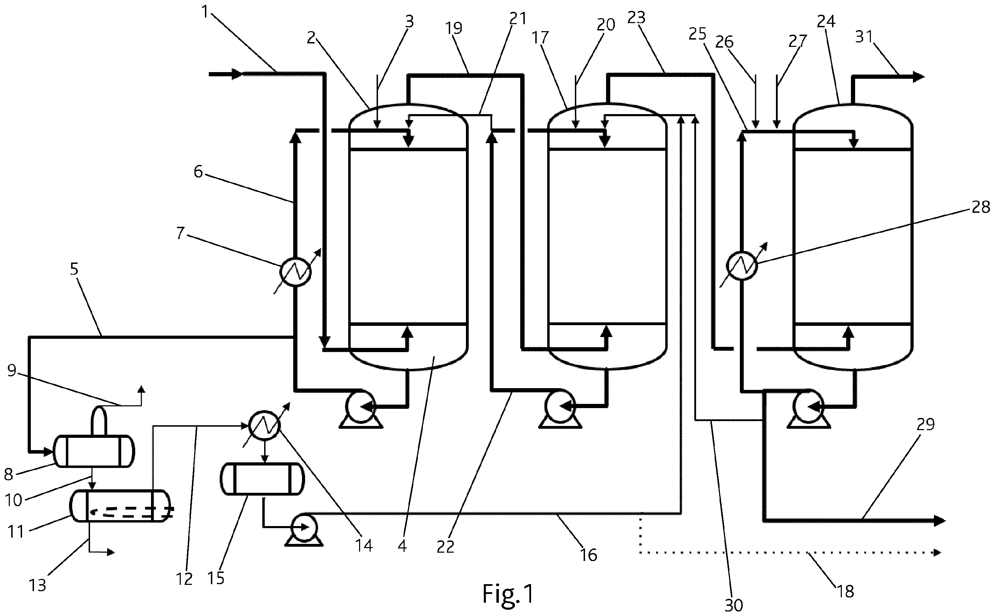

The invention will now be described by means of an exemplary embodiment illustrated in Fig. 1. The figure shows an inventive apparatus for performing the inventive method, comprising three gas scrubbers and a distillation unit.

As illustrated in Fig. 1, the process begins with hot flue gas 1, having a temperature around 150°C, which are injected into a series of gas scrubbers. Each scrubber operates under carefully controlled conditions to achieve maximum contaminant removal and water recovery, while minimizing chemical use and energy consumption.

In the first stage, the flue gas 1 enters a first gas scrubber 2 operating at 50°C, where it comes into contact with a first aqueous washing fluid maintained at a pH of 6.4. The pH of the first aqueous washing fluid is maintained by periodically adding an alkaline substance, preferably a 40% NaOH solution, through a first feeding device 3. For calculating the optimal amount of alkaline substance to add, a model is utilized based on the Pitzer Equation of State for non-ideal systems, predicting scale formation and pH behavior under real operational conditions. As a result, various contaminants such as sulfur compounds (SOₓ), halides (such as HCl, HBr), heavy metals, and particulate matter are dissolved as salts. These precipitates form a concentrated salt solution 4, which is continuously removed as a rich water purge 5 from the bottom of the scrubber to maintain optimal performance. The Pitzer model allows for precise control of contaminant removal, ensuring scalability and system efficiency. The first gas scrubber 2 comprises a recirculation line 6 for pumping the first aqueous washing fluid from the bottom to the top of the scrubber 2. The recirculation line 6 comprises a heat exchanger 7 for cooling the first aqueous washing fluid, the first feeding device 3, and a branch line for withdrawing the rich water purge 5. The rich water purge 5 is deaerated in a deaerator 8, to remove a purge gas 9. The deaerated rich water purge 10 is heated in a boiler 11, to obtain clean steam 12 and a concentrated salt solution 13. This additional step further concentrates the rich water purge 5, minimizing its water content and producing a highly concentrated waste stream that is easy to manage. Preferably, the concentrated salt solution 13 has a pH of around 6.8. Preferably, it may be discharged without any further treatment. The clean steam 12 is fed to a heat exchanger 14 for condensation to obtain clean water in a condenser 15, preferably at about 50 °C. The clean water recovered from the deaerator 8, as well as from the condenser 15, can either be recycled back into the system or safely discharged, depending on site-specific needs. Via a clean water line 16, the clean water is preferably at least partially fed to a second gas scrubber 17. Another part of the clean water may be discharged via a discharge line 18 to keep the water volume in the system constant.

The partially treated flue gas 19 exits the first gas scrubber 2 and is directed into the second gas scrubber 17, which operates with a second aqueous washing fluid at a slightly higher pH of 6.7 and at a temperature of around 50°C. This second stage is designed to remove additional contaminants, including trace amounts, through further dissolution as salts. The pH of the second aqueous washing fluid is maintained by periodically adding an alkaline substance, preferably a 40% NaOH solution, through a second feeding device 20. For calculating the optimal amount of alkaline substance to add, a model based on the Pitzer Equation of State for non-ideal systems may be used, predicting scale formation and pH behavior under real operational conditions. The contaminants collected in the second gas scrubber 17 are fed back to the first gas scrubber 2 via a first connection line 21, optimizing resource use and reducing waste. The second gas scrubber 17 comprises a recirculation line 22 for pumping the second aqueous washing fluid from the bottom to the top of the scrubber 17. The recirculation line 22 comprises the second feeding device 20 and a connection to the first connection line 21. The semi-lean gas 23, now largely free of contaminants, proceeds to the final drying stage.

The semi-lean gas 23 exits the second gas scrubber 17 and is injected into a water condenser 24, where the gas is cooled by injection of a third aqueous washing fluid, and excess water is removed. Concurrently, the water extracted from the water condenser 24 is treated using Advanced Oxidation Processes (AOPs), such as ozone and UV, to further degrade any remaining organic compounds like VOCs, NOₓ, H₂S, Hg and enhance contaminant removal. The water condenser 24 comprises a recirculation line 25 for pumping the third aqueous washing fluid from the bottom to the top of the water condenser 24. The recirculation line 25 comprises a third feeding device 26, a UV source 27 and a heat exchanger 28 for cooling the third aqueous washing fluid. A condensate discharge line 29 is branched off from the recirculation line 25 to remove excess water from the system. Preferably, a second connection line 30 for feeding a part of the third aqueous washing fluid to the second gas scrubber 17 is branched off from the recirculation line 25 or from the condensate discharge line 29. This results in a lean gas 31, preferably with less than 4% water content and a temperature of around 29.5°C, which is now ready for carbon capture, utilization or storage, or other downstream processes.

## Claims

1. A method for the removal of contaminants from a flue gas (1) of a cement plant to obtain a lean gas (31), comprising
- a first gas washing and cooling step with a first aqueous washing fluid comprising an alkaline substance to remove sulfur oxides, halides, heavy metals, and/or particulate matter from the flue gas (1), and subsequently
- at least one additional gas washing and/or cooling step with another aqueous washing fluid to remove additional contaminants and/or humidity from the flue gas (1).

2. The method according to claim 1, wherein at least a portion of the first aqueous washing fluid is withdrawn from the first gas washing step and distilled to obtain a concentrated salt solution (13) and clean water (16), wherein said clean water is fed back to any one of said gas washing and/or cooling steps.

3. The method according to claim 2, wherein thermal energy of the flue gas (1) is utilized in said distillation step to heat said portion of the first aqueous washing fluid.

4. The method according to any one of claims 1 to 3, wherein said at least one additional gas washing and/or cooling step comprises a second gas washing step with a second aqueous washing fluid comprising an alkaline substance,
wherein the pH of the second aqueous washing fluid is higher than the pH of the first aqueous washing fluid.

5. The method according to claim 4, wherein the pH of the first aqueous washing fluid is between 5.0 and 8.0**,** preferably between 6.3 and 6.5 and the pH of the second aqueous washing fluid is between 5.0 and 8.0**,** preferably between 6.5 and 7.0.

6. The method according to claim 4 or 5, wherein the first aqueous washing fluid and/or the second aqueous washing fluid has a temperature between 35°C and 65°C, preferably between 45°C and 55°C.

7. The method according to any one of claims 1 to 6, wherein an alkaline substance is added to the first aqueous washing fluid, preferably to the first and second aqueous washing fluids, with an optimized rate to prevent scaling and to optimize contaminant removal, wherein the optimized rate for the addition of alkaline substance to each aqueous washing fluid is calculated using the Pitzer model.

8. The method according to any one of claims 1 to 7, wherein said at least one additional gas washing and/or cooling step comprises a final cooling and gas washing step with a third aqueous washing fluid to reduce the humidity of the flue gas by condensation, obtaining said lean gas (31), preferably wherein the water content of the lean gas (31) is less than 4 mol%.

9. The method according to claim 8, wherein the third aqueous washing fluid is subjected to an advanced oxidation process (AOP), preferably using ozone and/or UV radiation to oxidize organic compounds, nitrogen oxides, hydrogen sulfide and/or mercury.

10. The method according to claims 8 or 9, wherein the temperature of the lean gas (31) after the final cooling and gas washing step is less than 40 °C, preferably less than 30 °C.

11. The method according to any one of claims 1 to 10, wherein the aqueous washing fluid of each gas washing step is, after contacting the respective aqueous washing fluid with the flue gas (1), at least partially fed to the previous gas washing step.

12. The method according to any one of claims 1 to 11, wherein the flue gas (1) is contacted with said aqueous washing fluids in countercurrent flow.

13. The method according to any one of claims 1 to 12, wherein the lean gas (31) is subjected to a carbon capture process.

14. Apparatus for the removal of contaminants from a flue gas (1) of a cement plant to obtain a lean gas (31), comprising
- a first gas scrubber (2) comprising a first aqueous washing fluid, the first aqueous washing fluid comprising an alkaline substance and being suitable for removal of sulfur oxides, halides, heavy metals, and/or particulate matter from the flue gas, and
- at least one additional gas scrubber (17, 24) comprising another aqueous washing fluid, the other aqueous washing fluid being suitable for removal of additional contaminants from the flue gas and/or for removal of humidity by condensation.

15. Apparatus according to claim 14, further comprising
- a distillation unit being connected to the first gas scrubber (2) to distill at least a portion of the first aqueous washing fluid to obtain a concentrated salt solution (13) and clean water (16),
- a piping connection (16) for feeding said clean (16) water back to any one of said gas scrubbers.

16. The apparatus according to claim 14 or 15, wherein said at least one additional gas scrubber comprises a second gas scrubber (17), the second gas scrubber (17) comprising a second aqueous washing fluid, the second aqueous washing fluid comprising an alkaline substance,
wherein the pH of the second aqueous washing fluid is higher than the pH of the first aqueous washing fluid.

17. The apparatus according to any one of claims 14 to 16, wherein said at least one additional gas scrubber comprises a final gas scrubber (24), the final gas scrubber (24) comprising a third aqueous washing fluid and a cooling unit (28) for cooling the third aqueous washing fluid, so that the final gas scrubber (24) is suitable for cooling the flue gas (1) and for reducing the humidity of the flue (1) gas by condensation, preferably wherein the water content of the lean gas (31) is less than 4 mol%.

18. The apparatus according to any one of claims 14 to 17, wherein each gas scrubber is connected to the previous gas scrubber by a liquid conduit (21, 30) so that the aqueous washing fluid of each gas scrubber may at least partially be fed to the previous gas scrubber.

19. The apparatus according to any one of claims 14 to 18, wherein each gas scrubber is a countercurrent gas scrubber.
